# EUROPÄISCHE PATENTSCHRIFT

(11) **EP 1 959 859 B1**
(45) Veröffentlichungstag und Bekanntmachung des Hinweises auf die Patenterteilung: **26.02.2014**
(21) Anmeldenummer: 06791606.4
(22) Anmeldetag: 22.08.2006
(51) Int. Cl.: A61C 17/22

(54) **HANDTEIL EINER ELEKTRISCHEN ZAHNBÜRSTE**
HANDPIECE OF AN ELECTRIC TOOTHBRUSH
MANCHE D'UNE BROSSE A DENTS ELECTRIQUE

(30) Priorität: 25.08.2005 DE 102005040136
(43) Veröffentlichungstag der Anmeldung: 27.08.2008
(73) Patentinhaber: Braun GmbH, 61476 Kronberg (DE)
(72) Erfinder: KRESSNER, Gerhard, 63674 Altenstadt (DE); HAAS, Martin, 65760 Eschborn (DE)
(74) Vertreter: Schneider, Stefan Michael
(86) Internationale Anmeldenummer: PCT/EP2006/008230
(87) Internationale Veröffentlichungsnummer: WO 2007/022949

(56) Entgegenhaltungen:
- WO-A-2004/054467
- WO-A-2005/000149
- DE-C1- 4 201 091
- DE-C2- 19 940 369
- US-A1- 2003 115 695
- US-A1- 2003 204 925

## Beschreibung

Die vorliegende Erfindung betrifft ein Handteil einer elektrischen Zahnbürste mit einem Gehäuse, in dem eine Antriebseinheit aufgenommen ist, wobei das Gehäuse eine stirn- oder rückseitige Gehäuseöffnung aufweist, die von einem Deckel vorzugsweise feuchtigkeits- und flüssigkeitsdicht verschließbar ist, wobei an dem Gehäuse und/oder dem Deckel Rastmittel zum Verrasten des Deckels an dem Gehäuse vorgesehen sind.

Ein Handteil einer elektrischen Zahnbürste der oben genannten Gattung ist beispielsweise aus der DE 199 40 369 C2 bekannt. In den Gehäusen der Handteile von elektrischen Zahnbürsten befinden sich außer dem Elektromotor der Antriebseinheit regelmäßig auch Batterien oder Akkus zur Energieversorgung der Antriebseinheit, so daß das Gehäuse geöffnet werden muß, um die Batterien bzw. Akkus entnehmen und austauschen zu können. Hierzu ist es bekannt, an der dem Zahnbürstenkopf abgewandten Rückseite des Gehäuses eine Gehäuseöffnung vorzusehen, die mit einem Gehäusedeckel verschlossen werden kann. Andererseits wurde bereits vorgeschlagen, auf der dem Zahnbürstenkopf zugewandten Stirnseite einen Gehäusedeckel vorzusehen, der eine Gehäuseöffnung verschließt, durch die hindurch die Antriebseinheit von oben her In das Gehäuse eingesetzt werden kann. Ein solcher Gehäusedeckel auf der Oberseite des Handteils muss jedoch mit dem Gehäuse kraft- und/oder formschlüssig fest verbunden werden, um die über das Bürstenrohr eingeleiteten Putzkräfte abfangen zu können und einen feuchtigkeits- und flüssigkeitsdichten Verschluß des Gehäuses auch unter Belastung sicherzustellen. Das Bürstenrohr wird dabei nämlich an den Gehäusedeckel angekuppelt, wobei sich der Antriebsstrang von der in dem Gehäuse aufgenommenen Antriebseinheit durch den Gehäusedeckel und das Bürstenrohr hindurch zum Bürstenkopf erstreckt. Es wurde daher vorgeschlagen, einen solchen stirnseitigen Gehäusedeckel im Bereich des Antriebsstrangs durch Rastmittel mit dem Gehäuse fest zu verrasten, um die eingeleiteten Kräfte abfangen zu können. Eine solche Rastverbindung erschwert jedoch das Wiederlösen des Deckels, beispielsweise um die Antriebseinheit bzw. im Gehäuse aufgenommene Batterien oder Akkus entnehmen zu können. Aus der WO-A-2005/000149 ist ein Handteil gemäß dem Oberbegriff des Anspruchs 1 bekannt.

Hier will die vorliegende Erfindung Abhilfe schaffen. Ihr liegt die Aufgabe zugrunde, ein verbessertes Handteil einer elektrischen Zahnbürste zu schaffen, dass die Nachteile des Standes der Technik vermeidet und letzteren in vorteilhafter Weise weiterbildet. Vorzugsweise soll eine stabile, feste Verbindung zwischen dem Gehäuse und dem Deckel geschaffen werden, die sich nicht ungewollt löst, aber dennoch bei Bedarf einfach zu lösen ist.

Diese Aufgabe wird erfindungsgemäß durch ein Handteil gemäß Anspruch 1 gelöst. Bevorzugte Ausgestaltungen der Erfindung sind Gegenstand der abhängigen Ansprüche.

Es wird zwischen dem Deckel und dem Gehäuse eine Kombination aus Verrastung und Schraubeingriff zum Lösen der Verrastung vorgeschlagen. Erfindungsgemäß ist an dem Gehäuse und/oder dem Deckel zumindest eine zur Gehäuselängsachse ansteigende Aushubschräge oder -kurve vorgesehen, über die der Deckel durch Verdrehen um die Gehäuselängsachse axial vom Gehäuse abhebbar ist und die Rastmittel lösbar sind. Die Aushubschräge oder -kurve ermöglicht einen Schraub- oder Rasteingriff zwischen dem Deckel und dem Gehäuse und bewirkt beim Lösen der Verrastung nach Art einer Verschraubung ein Umsetzen einer Drehbewegung des Deckels in eine Axialbewegung desselben. Durch Verdrehen des Deckels können die Rastmittel kraftsparend ausgehebelt werden, die durch eine Zwangsführung mit Schraubeingriff zur Entriegelung gezwungen werden. Durch die Kombination der Verrastung des Deckels am Gehäuse und der einen Schraubeingriff der Rastmittel ermöglichenden Aushubschräge oder -kurve zum Lösen des Deckels durch Verdrehen desselben wird einerseits eine feste, auch hohe Putzkräfte übertragende Verbindung zwischen Deckel und Gehäuse erreicht, andererseits jedoch eine verhältnismäßig kraftsparende Entriegelung der Verrastung ermöglicht.

In Weiterbildung der Erfindung wird die genannte Aushubschräge oder -kurve dabei vorteilhafterweise am Gehäuse von dem die genannte Gehäuseöffnung umgebenden Gehäuserand und am Deckel von der auf dem Gehäuserand aufsitzenden Aufsitzfläche, insbesondere dem Deckelrand, oder umgekehrt gebildet. Insbesondere kann der die Gehäuseöffnung umgebende Gehäuserand sich in einer zur Gehäuselängsachse geneigten Ebene oder Kurvenfläche erstrecken. Die durch den Deckel verschlossene Stirn- oder Rückseite des Gehäuses ist also beispielsweise abgeschrägt, sodaß bei einem im wesentlichen kreisförmigen Querschnitt des Gehäuses der Gehäuserand und der darauf sitzende Deckelrand die Form einer Ellipse erhalten.

Die Neigung der vom Gehäuserand definierten Ebene oder Kurvenfläche kann grundsätzlich verschieden gewählt werden, um einerseits die notwendigen Aushebelkräfte und andererseits einen möglichst großen axialen Stellweg zu erreichen. Die Neigung kann insofern an die Ausbildung der Rastmittel, die Passung zwischen dem Deckel und dem Gehäuse und deren Materialien sowie ggf. weiteren Parametern angepasst sein. Nach einer vorteilhaften Ausführung der Erfindung kann die von dem Gehäuserand definierte Ebene zur Gehäuselängsachse beispielsweise unter einem Winkel von etwa 65° bis 85°, vorzugsweise etwa 75° bis 80°, geneigt sein.

Über den zur Längsachse geneigten Gehäuserand wird durch Verdrehen des Deckels derselbe ausgehebelt, die Rastmittel zur Entriegelung gezwungen und der Deckel axial vom Gehäuse wegbewegt. Vorteilhafterweise tritt dabei eine leichte Kippbewegung des Deckels gegenüber dem Gehäuse auf, wodurch das Aushebeln der vorteilhafterweise über den Umfang des Gehäuses verteilten Rastmittel erleichtert wird.

Vorzugsweise bildet die genannte Aushubschräge oder -kurve gleichzeitig eine Dichtfläche zwischen dem Deckel und dem Gehäuse in axialer und/oder radialer Richtung. Insbesondere kann der die Gehäuseöffnung umgebende Gehäuserand sowie die darauf sitzende Deckelsitzfläche diese Doppelfunktion übernehmen. Ist der Gehäuserand in der zuvor genannten Weise zur Gehäuselängsachse schräg verlaufend in einer geneigten Ebene, kann einerseits mit dem Deckel das Gehäuse abgedichtet und andererseits der Deckel in einfacher Weise vom Gehäuse abgeschraubt werden.

Alternativ oder zusätzlich kann eine Aushubschräge oder -kurve der genannten Art jedoch auch in das Gehäuse hineinversetzt sein. Der Deckel kann vorteilhafterweise einen Kragen besitzen, mit dem er in das Gehäuse einsetzbar ist. An diesem Kragen und/oder einem dazu benachbarten Innenwandungsabschnitts des Gehäuses kann zumindest eine Aushubschräge vorgesehen sein, die sich vorteilhafterweise schraubenlinienförmig um die Gehäuselängsachse erstreckt. Die Aushubschräge gelangt dabei spätestens beim Verdrehen des Deckels relativ zum Gehäuse mit dem Kragen des Deckels und/oder dem dazu benachbarten Innenwandungsabschnitt in Eingriff, sodaß die Drehbewegung des Deckels in eine axiale Stellbewegung umgesetzt und der Deckel ausgehebelt wird.

Vorteilhafterweise kann der in das Gehäuse hineinversetzte Deckel zumindest eine Aushubschräge oder -kurve an den Rastmitteln aufweisen, die den Deckel am Gehäuse verriegeln oder umgekehrt. Insbesondere kann die Aushubschräge von den Unterkanten der entsprechenden Rastvorsprünge und -ausnehmungen gebildet sein, die der Gehäuseöffnung bzw. dem darauf aufsitzenden Deckelrand abgewandt sind. Während die Oberkanten der genannten Rastvorsprünge und -ausnehmungen die Verriegelung bewirken, die den Deckel auf dem Gehäuse hält, können die gegenüberliegenden Unterkanten der genannten Rastvorsprünge und -ausnehmungen als Aushubschräge zum Lösen der Verrastung genutzt werden.

Vorteilhafterweise braucht der Deckel bei seiner Montage auf das Gehäuse relativ zu diesem nicht verdreht werden. Die Rastmittel sind in Weiterbildung der Erfindung derart ausgebildet, dass sie durch eine reine Axialbewegung verrastbar sind. Um das Aufsetzen des Deckels dabei zu erleichtern, können die Rastvorsprünge und/oder die Innenwandung des Gehäuses an dem die Gehäuseöffnung umgebenden Gehäuserand Einführschrägen aufweisen, um die Rastvorsprünge vor Erreichen der damit zusammenwirkenden Hinterschneidung bzw. Ausnehmung leichter über die entsprechende Kontur hinweggleiten zu lassen. Die genannte Aushubschräge bewirkt also vorteilhafterweise einen nur einfach wirkenden Schraubeingriff. Der Deckel kann hierüber abgeschraubt, muß aber nicht angeschraubt werden.

Um das Aushebeln der Verrastung zu erleichtern, können die Verrastung bewirkende Rastkanten an entsprechenden Rastvorsprüngen und -ausnehmungen bzw. -hinterschnei- dungen sich schraubenlinien- oder kurvenförmig um die Längsachse des Gehäuses bzw. des Deckels erstrecken. Die Rastmittel können auch insgesamt vorzugsweise sägezahnförmige Schraubgewindeabschnitte bilden.

In bevorzugter Weiterbildung der Erfindung besitzt das Gehäuse nur die eine vorgenannte Gehäuseöffnung, durch die die Antriebseinheit und/oder Batterien oder Akkus hierfür in das Gehäuse einführbar sind. Diese einzige Gehäuseöffnung liegt beispielsweise auf der dem Bürstenkopf zugewandten Stirnseite des Handteils. Der dementsprechend einzige Gehäusedeckel verschließt das Gehäuse im Bereich des Antriebsstrangs. Um das Einsetzen bzw. Herausnehmen der Antriebseinheit von der Oberseite des Handteils her zu erleichtern, kann das Gehäuse insgesamt leicht konisch ausgebildet sein, sodaß es sich zu der Gehäuseöffnung hin erweitert.

Um eine feuchtigkeitsdichte Dichtung zwischen dem Gehäuse und dem Deckel zu erreichen, kann grundsätzlich in an sich bekannter Weise eine separate Dichtung, insbesondere in Form eines O-Rings, zwischen dem Gehäuse und dem Deckel angeordnet werden. Nach einer bevorzugten Ausführung der Erfindung jedoch kann der die Gehäuseöffnung umgebende Gehäuserand aus Weichkunststoff bestehen, wobei der Weichkunststoff zumindest die Dichtsitzfläche bildet, auf der der Deckelrand aufsitzt.

Das Gehäuse kann vorteilhafterweise aus zwei Kunststoffkomponenten, insbesondere einem Weichkunststoff und einen Hartkunststoff, integral einstückig spritzgegossen sein. Es versteht sich jedoch, daß grundsätzlich auch eine einkomponentige Ausbildung des Gehäuses, insbesondere aus einem Hartkunststoff, möglich ist, wobei in diesem Fall eine herkömmliche Dichtung über einen O-Ring bevorzugt ist.

Um die notwendige Dichtkraft zwischen Deckel und Gehäuse aufzubringen und/oder einen wackelfreien Sitz des Deckels auf dem Gehäuse sicherzustellen, sind die Rastmittel vorzugsweise derart ausgebildet, daß eine Zugkraft auf den Deckel bzw. den Dichtsitz wirkt. Die Rastmittel halten im verrasteten Zustand den Deckel mit einem Presssitz auf dem die Gehäuseöffnung umgebenden Gehäuserand.

Um ein auswechselbares Bürstenteil mit dem Handteil verbinden zu können, kann der Deckel ein Kupplungsstück, insbesondere ein Steckkupplungsstück, zum Ankuppeln einer solchen Aufsatzbürste besitzen. Zur Durchführung des Antriebsstrangs kann der Deckel, insbesondere in der Stirnseite des genannten Steckkupplungsstücks, ein Durchgangsloch für den Antriebsstrang aufweisen.

Um eine werkzeugfreie Demontage des Gehäusedeckels zu ermöglichen, zeichnet sich nach einem weiteren Aspekt das Ladeteil für das Zahnbürstenhandteil durch Verriegelungsmittel zum drehfesten Verriegeln des Deckels an dem Ladeteil aus. Insbesondere können die Verriegelungsmittel aus einer Ausnehmung in dem Ladeteilgehäuse bestehen, in die das vorgenannte Bürstenrohr-Steckkopplungsstück des Gehäusedeckels einsteckbar ist, sodaß es drehfest verriegelt ist. Hierdurch kann ohne Zange oder dergleichen der Deckel des Handteilgehäuses entfernt werden, Indem das Steckkupplungsstück des Deckels, das eigentlich dem Aufsetzen des Bürstenteils dient, in die komplementäre Ausnehmung im Ladeteil eingeschoben wird. Über das gut greifbare Ladeteil kann der Deckel dann abgedreht werden.

Diese und weitere Merkmale, die für sich, in Kombination oder Unterkombination miteinander den Gegenstand der vorliegenden Erfindung bilden können, gehen außer aus den Ansprüchen auch aus der nachfolgenden Beschreibung eines bevorzugten Ausführungsbeispiels und den zugehörigen Zeichnungen hervor. In den Zeichnungen zeigen:
- Fig. 1:: eine perspektivische Explosionsdarstellung des Handteils einer elektrischen Zahnbürste nach einer bevorzugten Ausführung der Erfindung, die eine stirnseitige Gehäuseöffnung und den zugehörigen, davon jedoch abgehobenen Deckel zeigt,
- Fig. 2:: eine Seitenansicht des Gehäuses des Handteils aus Fig. 1,
- Fig. 3:: einen Längsschnitt durch das Gehäuse aus Fig. 2, der den zur Gehäuselängsachse geneigten Gehäuserand an der Gehäuseöffnung und eine Rastausnehmung in der Gehäuseinnenwandung zeigt,
- Fig. 4:: eine Seitenansicht des Gehäusedeckels aus Fig. 1,
- Fig. 5:: eine gegenüber Figur 4 um 90° gedrehte Seitenansicht des Gehäusedeckels im Teilschnitt, und
- Fig. 6:: eine perspektivische Ansicht eines Deckel mit zusätzlichen Rastmitteln.

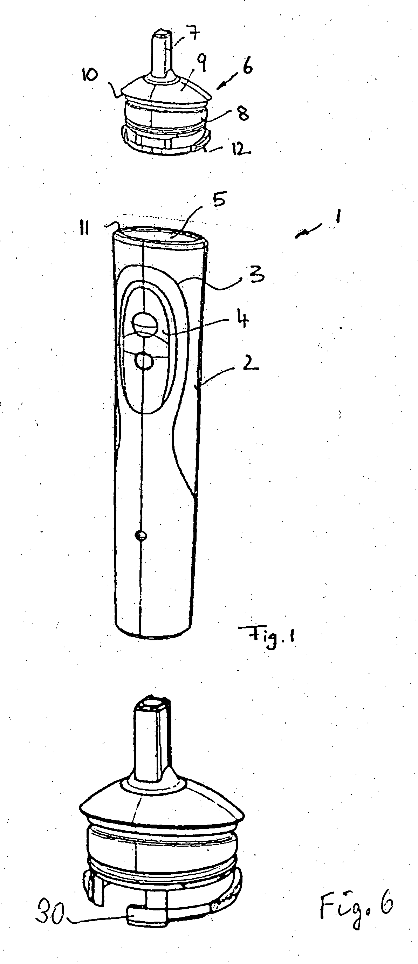

Das in Figur 1 gezeigte Handteil 1 einer elektrischen Zahnbürste umfasst ein etwa stabbzw. rohrförmiges Gehäuse 2, in dem eine an sich bekannte Antriebseinheit mit einem Elektromotor, einer Steuerungseinheit mit zumindest einem Ein-/Aus-Schalter sowie einer Energieversorgung in Form eines Akkus oder einer Batterie angeordnet ist. Das Gehäuse 2 ist dabei nach einer vorteilhaften Ausführung der Erfindung in einem Zweikomponentenspritzgußverfahren aus Hartkunststoff und Weichkunststoff spritzgegossen. Insbesondere kann der als Griffbereich 3 dienende Abschnitt des Gehäuses 2 mit einem Weichkunststoffbelag überzogen sein. Zudem kann ein Betätigungsabschnitt 4 allein aus Weichkunststoff spritzgegossen sein, sodaß in diesem Bereich das Gehäuse 2 eingedrückt werden kann, um den darunter angeordneten Ein-/Aus-Schalter betätigen zu können.

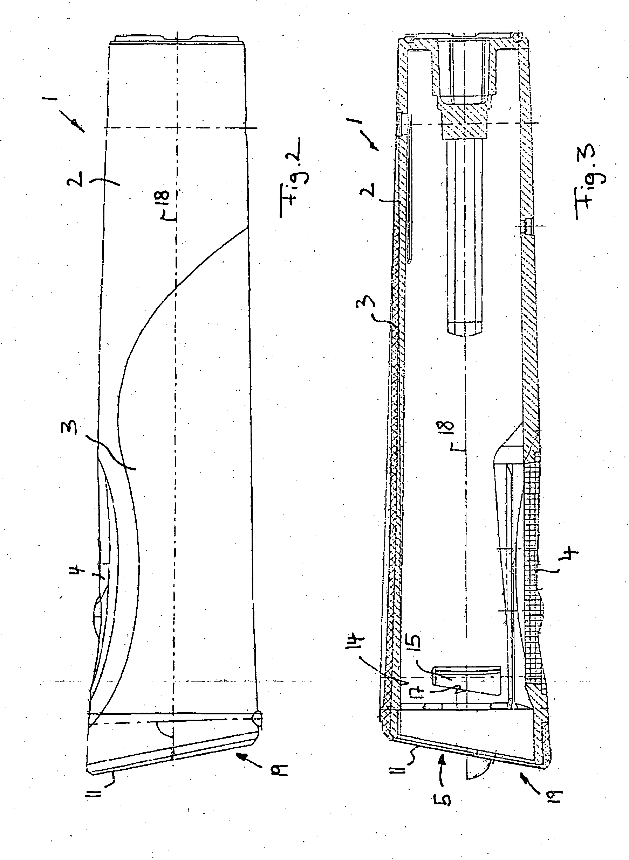

Wie die Figuren 2 und 3 zeigen, weist das Gehäuse 2 dabei lediglich eine einzige Gehäuseöffnung 5 auf, und zwar an seinem dem aufzusetzenden Zahnbürstenkopf zugewandten stirnseitigen Ende, während die gegenüberliegende Rückseite des Gehäuses 2, also sozusagen der Boden des Gehäuses 2, geschlossen ausgebildet sein kann. Die Antriebseinheit, die zugehörige Steuereinheit sowie die Batterien bzw. Akkus können über die Gehäuseöffnung 5 an der Bürstenkopfstirnseite des Gehäuses 2 in letzteres eingesetzt werden.

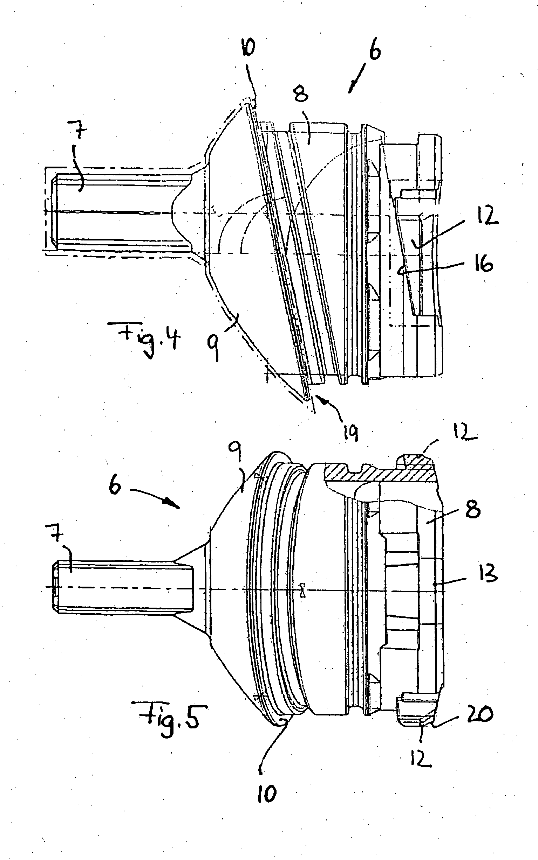

Die Gehäuseöffnung 5 kann durch einen Deckel 6 verschlossen werden, der axial auf die Gehäuseöffnung 5 aufsetzbar ist. Wie die Figuren 1 und 5 zeigen, besitzt dieser Deckel 6 einen Fortsatz, der ein Kupplungsstück 7 zum Ankuppeln des Bürstenrohrs einer Aufsatzbürste bildet. Das Kupplungsstück 7 ist in der gezeichneten Ausführung als Steckkupplungsstück ausgebildet, sodaß die Aufsteckbürste lediglich aufgesteckt werden muß. Im Kupplungsstück 7 ist dabei eine nicht näher gezeigte Durchgangsausnehmung vorgesehen, durch die hindurch der Antriebsstrang, insbesondere dessen Antriebswelle, von der im Gehäuse 2 aufgenommenen Antriebseinheit zu dem Bürstenkopf geführt werden kann.

Da über das Kupplungsstück 7 und das daran befestigte Bürstenrohr vom Bürstenkopf her Putzkräfte und -momente in den Deckel 6 eingeleitet werden, muß dieser ausreichend fest mit dem Gehäuse 2 verbunden sein, wozu in der gezeichneten Ausführung zwischen dem Deckel 6 und dem Gehäuse 2 ein Kraft- und Formschluss hergestellt wird.

Der Deckel 6 besitzt einen im wesentlichen - grob gesprochen - zylindrischen Kragen 8, der passgenau in die Gehäuseöffnung 5 des Gehäuses 2 einschiebbar ist. Wie Figur 4 zeigt, ist der Kragen 8 gegenüber dem platten- bzw. leicht linsenförmig gewölbten Verschlussabschnitt 9 im Umfang leicht zurückgesetzt, d.h. der Deckel 6 besitzt einen gegenüber dem Kragen 8 leicht überstehenden Randsteg 10, mit dem der Deckel 6 passgenau auf dem die Gehäuseöffnung 5 umgebenden Gehäuserand 11 aufsitzt, wenn der Deckel 6 mit seinem Kragen 8 vollständig in die Gehäuseöffnung 5 eingeschoben ist.

Der Deckel 6 kann hierbei an dem Gehäuse 2 verrastet werden. Hierzu sind an dem Kragen 8 radial nach außen vorspringende, etwa stegförmig ausgebildete Rastvorsprünge 12 vorgesehen, wobei in der gezeichneten Ausführung zwei diametral gegenüberliegende Rastvorsprünge 12 vorgesehen sind (vgl. Figur 5). Zwischen den Rastvorsprüngen 12 besitzt der Kragen 8 zwei gegenüberliegende Randeinschnitte 13, sodaß ein Zurückfedern der die Rastvorsprünge 12 tragenden Kragenabschnitte radial nach innen unterstützt wird.

Mit den genannten Rastvorsprüngen 12 wirken an der Innenwandung 14 des Gehäuses 2 vorgesehene Rastausnehmungen 15 zusammen, die in einen aus Hartkunststoff gebildeten Wandungsabschnitt des Gehäuses 2 eingearbeitet sind. Vorteilhafterweise gehen die genannten Rastausnehmungen 15 vollständig durch die Hartkunststoffschale des Gehäuses 2 hindurch, sodaß sie lediglich von der äußeren Weichkunststoffschale des Gehäuses 2 nach außen hin verschlossen sind. Dies ermöglicht es bei Kenntnis der Lage der Rastausnehmungen 15 von außen die eingeschnappten Rastvorsprünge 12 einzudrücken.

Wie die Figuren 3 und 4 zeigen, besitzen die Rastvorsprünge 12 und die Rastausnehmungen 15 jeweils eine leicht keilförmige Kontur. Die die Verriegelung bewirkenden Rastkanten 16 und 17, die von den der Gehäuseöffnung 5 bzw. der Deckeloberseite zugewandten Oberseiten bzw. Oberkanten der Rastvorsprünge 12 und Rastausnehmungen 15 gebildet werden, besitzen einen gegenüber der Gehäuselängsachse 18 leicht ansteigenden Verlauf, d.h. sie erstrecken sich nicht im rechten Winkel zur Gehäuselängsachse 18. Wie die Figuren 3 und 4 zeigen, sind die genannten Rastkanten 16 und 17 in einem Winkelbereich von etwa 65° bis 85°, genauer gesagt etwa 75° bis 85°, insbesondere etwa 80°, geneigt. Die Unterkante, d.h. die von der Gehäuseöffnung 5 abgewandte Kante der Rastausnehmungen 15 sowie der Rastvorsprünge 12 sind hingegen nicht geneigt, sondern verlaufen etwa rechtwlnklig zur Gehäuselängsachse 18, sodaß die Rastvorsprünge 12 und die Rastausnehmungen 15 eine etwa keilförmige Gestalt erhalten.

Wie Figur 5 zeigt, springen die Rastkanten 16 der Rastvorsprünge 12 nicht rechtwinklig von dem Kragen 8 vor, sondern sind unter einem Winkel im Bereich von etwa 5° bis 15° leicht nach oben ansteigend ausgebildet (vgl. Figur 5), sodaß die Rastvorsprünge 12 sich unter Zug in den Rastausnehmungen 15 festziehen. Ein ungewolltes Aufspringen bei kräftigem Zähneputzen wird hierdurch vermieden.

Die Rastausnehmungen 15 sowie die Rastvorsprünge 12 sind von dem Gehäuserand 11 bzw. dem darauf aufliegenden Randsteg 10 des Deckels 6 derart beabstandet, daß bei eingerastetem Deckel 6 dieser unter einem leichten Presssitz auf den Gehäuserand 11 gezogen wird, um einen dichten Verschluß des Gehäuses 2 zu erreichen. Vorteilhafterweise ist der Gehäuserand 11 aus Weichkunststoff, sodaß eine Dichtwirkung ummittelbar durch den Sitz des Randsteges 10 auf dem Gehäuserand 11 erreicht werden kann. Ein separater Dichtring ist nicht unbedingt erforderlich.

Wie die Figuren 2 bis 4 zeigen, liegen der Gehäuserand 11 und der darauf aufsitzende Deckelrand nicht in einer zur Gehäuselängsachse 18 senkrechten Ebene. Vielmehr ist der Gehäuserand 11 und der darauf aufsitzende Randsteg 10 des Deckels 6 angeschrägt, d.h. sie erstrecken sich in einer zur Gehäuselängsachse 18 spitzwinklig unter einem Winkel von weniger als 90° geneigten Ebene. Der Neigungswinkel kann grundsätzlich verschieden gewählt sein, wird sich vorteilhafterweise jedoch in einem Bereich von 70° bis 85° bewegen. In der gezeichneten Ausführung beträgt der Winkel etwa 79°.

Der geneigte Gehäuserand 11 sowie der entsprechend geneigte Deckelrand bzw. Randsteg 10 des Deckels 6 bilden zusammen eine Aushubschräge 19, durch die nach Art einer Verschraubung durch Drehen des Deckels 6 relativ zum Gehäuse 2 um dessen Längsachse 18 die Verrastung zwischen Deckel und Gehäuse ausgehebelt werden kann. Dieses Lösen der Verrastung wird durch die zuvor beschriebene Neigung der Rastkanten 16 erleichtert.

Um das Abdrehen des Deckels 6 von dem Gehäuse 2 zu erleichtern, kann vorteilhafterweise das Ladeteil für die elektrische Zahnbürste als Drehwerkzeug genutzt werden. Das Kupplungsstück 7 an dem Deckel 6 besitzt vorteilhafterweise eine von der Kreisform abweichende Außenkontur, die geeignet ist, ein Drehmoment zu übertragen. Dementsprechend kann in das Gehäuse des Ladeteils eine komplementäre Ausnehmung, insbesondere ein Sackloch, eingebracht sein, dessen Innenkontur in entsprechender Weise von der Kreisform abweicht und geeignet ist, ein Drehmoment zu übertragen. Dementsprechend braucht das Handteil 1 mit dem Kupplungsstück 7 am Deckel 6 lediglich in diese Ausnehmung im Ladeteil eingesteckt zu werden, sodaß der Deckel 6 am Ladeteil drehfest verriegelt ist. Um den Deckel vom Gehäuse zu lösen, braucht lediglich das Ladeteil festgehalten und das Gehäuse 2 verdreht werden oder umgekehrt.

Um den Deckel 6 mit dem Gehäuse 2 zu verriegeln, braucht dieser lediglich axial ohne Verdrehung in der richtigen Ausrichtung auf das Gehäuse 2 aufgesetzt und in dieses eingeschoben werden, bis die Rastvorsprünge 12 am Kragen 8 des Deckels 6 in die Rastausnehmungen 15 einrasten. Um das Einschieben in die Gehäuseöffnung 5 zu erleichtern, besitzen die zunächst radial überstehenden Rastvorsprünge 12 an ihrer Unterseite Einfuhrschrägen 20 (vgl. Figur 5), über die der Kragen 8 mit den Rastvorsprüngen 12 besser in das Gehäuse 2 gezwängt werden kann. Hierbei wird eine leichte elastische Verformung des Kragens 8 radial nach innen und/oder des Gehäuses 2 radial nach außen entstehen, bis die Rastvorsprünge 12 in die Rastausnehmungen 15 einrasten.

Der in Figur 6 perspektivisch abgebildete Deckel weist zusätzliche Rastmittel 30 auf, die in zusätliche komplementäre Rastmittel am Gehäuse einrasten können. Diese zusätzliche Verrastung kann Kräfte in Längsrichtung des Gehäuses aufnehmen. Diese Rastmittel sind so ausgestaltet, daß sich der Deckel durch Drehen in einer ersten Drehrichtung leichter lösen läßt als in der Gegenrichtung.

## Patentansprüche

1. Handteil einer elektrischen Zahnbürste mit einem Gehäuse (2), in dem eine Antriebseinheit aufgenommen ist, wobei das Gehäuse (2) eine stirn- oder rückseitige Gehäuseöffnung (5) aufweist, die von einem Deckel (6) vorzugsweise feuchtigkeits- und flüssigkeitsdicht verschließbar ist, wobei am Gehäuse (2) und/oder am Deckel (6) kraft- und/oder formschlüssige Verriegelungsmittel (12, 15), insbesondere Rastmittel, zur Verriegelung des Deckels (6) am Gehäuse (2) vorgesehen sind, **dadurch gekennzeichnet, daß** am Gehäuse (2) und/oder am Deckel (6) zumindest eine zur Gehäuselängsachse ansteigende Aushubschräge oder -kurve (19) vorgesehen ist, über die der Deckel (6) durch Verdrehen um die Gehäuselängsachse (18) axial vom Gehäuse (2) abhebbar ist und die Verriegelungsmittel (12, 15) lösbar sind.

2. Handteil nach dem vorhergehenden Anspruch, wobei die Aushubschräge oder -kurve (19) am Gehäuse (2) von dem die Gehäuseöffnung (5) umgebenden Gehäuserand (11) und am Deckel (6) von einer auf dem Gehäuserand (11) aufsitzenden Deckelsitzfläche (10), insbesondere einem Deckelrandsteg, gebildet ist.

3. Handteil nach einem der vorhergehenden Ansprüche, wobei die Aushubschräge oder -kurve (19) gleichzeitig eine Dichtfläche zwischen dem Deckel (6) und dem Gehäuse (2) bildet.

4. Handtell nach einem der vorhergehenden Ansprüche, wobei der die Gehäuseöffnung (5) umgebende Gehäuserand (11) sich in einer zur Gehäuselängsachse (18) geneigten Ebene oder Kurvenfläche erstreckt.

5. Handteil nach dem vorhergehenden Anspruch, wobei die von dem Gehäuserand (11) definierte Ebene zur Gehäuselängsachse (18) unter einem Winkel von etwa 65° bis 85°, vorzugsweise etwa 75° bis 80°, geneigt ist.

6. Handteil nach einem der vorhergehenden Ansprüche, wobei das Gehäuse (2) nur die genannte eine Gehäuseöffnung (5) aufweist, durch die die Antriebseinheit in das Gehäuse (2) einführbar ist, und/oder der genannte Deckel (6) der einzige Gehäusedeckel ist.

7. Handteil nach einem der vorhergehenden Ansprüche, wobei das Gehäuse (2) sich zu der Gehäuseöffnung (5) hin insgesamt leicht konisch erweitert.

8. Handteil nach einem der vorhergehenden Ansprüche, wobei der Deckel (6) ein Durchgangsloch für einen Antriebsstrang aufweist, durch den die Antriebseinheit mit einem Bürstenkopf verbindbar ist.

9. Handteil nach einem der vorhergehenden Ansprüche, wobei der Deckel (6) ein Kupplungsstück (7), insbesondere Steckkupplungsstück, zum Ankuppeln einer Aufsatzbürste aufweist.

10. Handteil nach einem der vorhergehenden Ansprüche, wobei die Rastmittel (12, 15) im verrasteten Zustand den Deckel (6) mit einem Presssitz auf dem die Gehäuseöffnung (5) umgebenden Gehäuserand (11) halten.

11. Handteil nach einem der vorhergehenden Ansprüche, wobei das Gehäuse (2) aus zumindest zwei Kunststoffkomponenten, insbesondere einem Weichkunststoff und einem Hartkunststoff, spritzgegossen ist.

12. Handteil nach dem vorhergehenden Anspruch, wobei der die Gehäuseöffnung (5) umgebende Gehäuserand (11) aus Weichkunststoff besteht.

13. Handteil nach einem der vorhergehenden Ansprüche, wobei die Rastmittel (12, 15) durch eine reine Axialbewegung verrastbar sind.

14. Handteil nach einem der vorhergehenden Ansprüche, wobei die Rastmittel bildende Rastvorsprünge (12) und/oder die Innenwandung des Gehäuses (2) an dem die Gehäuseöffnung (5) umgebenden Gehäuserand (11) Einfuhrschrägen (20) aufweisen.

15. Handteil nach einem der vorhergehenden Ansprüche, wobei die Rastmittel bildende Rastvorsprünge (12) und -ausnehmungen (15) oder -hinterschneidungen Rastkanten (16, 17) besitzen, die sich etwa schraublinienförmig um die Längsachse (18) des Gehäuses (2) und/oder des Deckels (6) erstrecken.

16. Handteil nach einem der vorhergehenden Ansprüche, wobei der Deckel (6) einen Kragen (8) aufweist, mit dem der Deckel (6) in das Gehäuse (2) einsetzbar ist und der mit einer Innenwandung des Gehäuses (2) in Eingriff bringbar ist.

17. Handteil nach dem vorhergehenden Anspruch, wobei an dem Kragen (8) und/oder einem dazu benachbarten Innenwandungsabschnitt des Gehäuses (2) zumindest eine sich vorzugsweise schraublinienförmig um die Gehäuselängsachse erstreckende Aushubschräge oder -kurve vorgesehen ist.

18. Handteil nach einem der beiden vorhergehenden Ansprüche, wobei an dem Kragen (8) die deckelseitigen Rastmittel (12) vorgesehen sind oder umgekehrt.

19. Handteil nach einem der vorhergehenden Ansprüche, wobei zumindest eine Aushubschräge oder -kurve an den Rastmitteln zwischen dem Deckel und dem Gehäuse vorgesehen ist, die insbesondere von den von der Gehäuseöffnung oder dem Deckelrand abgewandten Unterkanten der die Rastmittel bildenden Rastvorsprünge und -ausnehmungen gebildet ist.

20. Handteil nach einem der vorhergehenden Ansprüche, wobei die Rastmittel vorzugsweise sägezahnförmige Schraubgewindeabschnitte bilden.

21. Elektrische Zahnbürste mit einem Handteil (1) nach einem der vorhergehenden Ansprüche.

## Claims

1. A handle of an electrical toothbrush, having a housing (2) in which a drive unit is accommodated, wherein the housing (2) has a housing opening (5) on its facing or rear side which may be closed by a cover (6), preferably so as to be impermeable to moisture and liquids; wherein non-positive and/or positive locking means (12, 15) - in particular catch means - are provided on the housing (2) and/or on the cover (6) for locking the cover (6) to the housing (2); **characterized in that** at least one lifting slope or curve (19) rising with respect to the longitudinal axis of the housing is provided on the housing (2) and/or on the cover (6), via which the cover (6) may be axially raised from the housing (2) by twisting around the longitudinal axis (18) of the housing and the locking means (12, 15) may be released.

2. A handle according to the preceding Claim, wherein the lifting slope or curve (19) is formed at the housing (2) by the housing edge (11) surrounding the housing opening (5) and, at the cover (6), by a cover seating surface (10) - particularly a cover edge web - which rests against the housing edge (11).

3. A handle according to one of the preceding Claims, wherein the lifting slope or curve (19) simultaneously forms a sealing surface between the cover (6) and the housing (2).

4. A handle according to one of the preceding Claims, wherein the housing edge (11) surrounding the housing opening (5) extends in a plane or curved surface which is inclined to the longitudinal axis (18) of the housing.

5. A handle according to the preceding Claim, wherein the plane defined by the housing edge (11) is inclined with respect to the longitudinal axis (18) of the housing at an angle of approximately 65° to 85°, advantageously approximately 75° to 80°.

6. A handle according to one of the preceding Claims, wherein the housing (2) has only the said single housing opening (5) through which the drive unit may be inserted into the housing (2), and/or the cited cover (6) is the sole housing cover.

7. A handle according to one of the preceding Claims, wherein the housing (2) conically expands slightly overall toward the housing opening (5).

8. A handle according to one of the preceding Claims, wherein the cover (6) has a through hole for a drive train, via which the drive unit may be connected with a brush head.

9. A handle according to one of the preceding Claims, wherein the cover (6) has a coupling piece (7) - particularly a plug-in coupling piece - for coupling to a brush attachment.

10. A handle according to one of the preceding Claims, wherein in the engaged state the catch means (12, 15) holds the cover (6) against the housing edge (11) with a force fit, which housing edge (11) surrounds the housing opening (5).

11. A handle according to one of the preceding Claims, wherein the housing (2) is injection-molded from at least two plastic components, particularly a soft plastic and a hard plastic.

12. A handle according to the preceding Claim, wherein the housing edge (11) surrounding the housing opening (5) is comprised of soft plastic.

13. A handle according to one of the preceding Claims, wherein the catch means (12, 15) may be engaged via a purely axial movement.

14. A handle according to one of the preceding Claims, wherein the catch projections (12) which form the catch means, and/or the inner wall of the housing (2) at the housing edge (11) surrounding the housing opening (5), have insertion inclines (20).

15. A handle according to one of the preceding Claims, wherein the catch projections (12) and catch recesses (15) or catch undercuts which form the catch means have catch edges (16, 17) which extend approximately in a helical shape around the longitudinal axis (18) of the housing (2) and/or of the cover (6).

16. A handle according to one of the preceding Claims, wherein the cover (6) has a collar (8) with which the cover (6) may be inserted in the housing (2) and that may be engaged with an inner wall of the housing (2).

17. A handle according to one of the preceding Claims, wherein at least one lifting slope or curve is provided on the collar (8) and/or on an inner wall segment of the housing (2) which is adjacent to the collar (8), which lifting slope or curve extends in a helical shape around the longitudinal axis of the housing.

18. A handle according to one of the preceding Claims, wherein the catch means (12) at the cover are provided on the collar (8), or vice versa [sic].

19. A handle according to one of the preceding Claims, wherein at least one lifting slope or curve is provided on the catch means between the cover and the housing, which slope or curve may in particular be formed by the lower edges of the catch projections and catch recesses which form the catch means, which lower edges are directed away from the housing opening or from the cover edge.

20. A handle according to one of the preceding Claims, wherein the catch means advantageously form saw-tooth screw thread segments.

21. An electric toothbrush with a handle (1) according to one of the preceding Claims.

## Revendications

1. Pièce à main d'une brosse à dents électrique avec un boîtier (2), dans lequel une unité d'entraînement est reçue, dans laquelle le boîtier (2) présente une ouverture de boîtier (5) du côté avant ou arrière, qui peut être fermée par un couvercle (6) de préférence de manière étanche à l'humidité et aux fluides, dans laquelle, sur le boîtier (2) et/ou sur le couvercle (6) sont prévus des moyens de verrouillage (12, 15) par encliquetage et/ou complémentarité de forme, en particulier des moyens d'encliquetage, pour le verrouillage du couvercle (6) sur le boîtier (2), **caractérisé en ce que** sur le boîtier (2) et/ou sur le couvercle (6) au moins une courbe ou pente d'évacuation (19) progressive sur l'axe longitudinal du boîtier est prévue, via laquelle le couvercle (6) peut être soulevé par rotation autour de l'axe longitudinal du boîtier (18) dans le sens axial depuis le boîtier (2) et les moyens de verrouillage (12, 15) peuvent être relâchés.

2. Pièce à main selon la revendication précédente, dans laquelle la courbe ou pente d'évacuation (19) est formée sur le boîtier (2) depuis le bord du boîtier (11) entourant l'ouverture du boîtier (5) et sur le couvercle (6) depuis une surface d'assise du couvercle (10) reposant sur le bord du boîtier (11), en particulier une arête de bord du couvercle.

3. Pièce à main selon une des revendications précédentes, dans laquelle la courbe ou pente d'évacuation (19) forme simultanément une surface d'étanchéité entre le couvercle (6) et le boîtier (2).

4. Pièce à main selon une des revendications précédentes, dans laquelle le bord du boîtier (11) entourant l'ouverture du boîtier (5) s'étend dans une surface courbe ou un plan incliné par rapport à l'axe longitudinal du boîtier (18).

5. Pièce à main selon la revendication précédente, dans laquelle le plan défini par le bord du boîtier (11) est incliné par rapport à l'axe longitudinal du boîtier (18) selon un angle compris entre environ 65° et 85°, de préférence entre environ 75° et 80°.

6. Pièce à main selon une des revendications précédentes, dans laquelle le boîtier (2) ne présente que l'unique ouverture de boîtier (5) précitée, à travers laquelle l'unité d'entraînement peut être insérée dans le boîtier (2) et/ou dans laquelle le boîtier précité (6) est le seul couvercle de boîtier.

7. Pièce à main selon une des revendications précédentes, dans laquelle le boîtier (2) s'évase jusqu'à l'ouverture de boîtier (5) de manière globalement légèrement conique.

8. Pièce à main selon une des revendications précédentes, dans laquelle le couvercle (6) présente un trou traversant pour la transmission, à travers lequel l'unité d'entraînement peut être reliée avec une tête de brosse.

9. Pièce à main selon une des revendications précédentes, dans laquelle le couvercle (6) présente un organe d'accouplement (7), en particulier un organe d'accouplement enfichable, pour le couplage d'une brosse formant embout.

10. Pièce à main selon une des revendications précédentes, dans laquelle les moyens d'encliquetage (12, 15) dans l'état encliqueté maintiennent le couvercle (6) par ajustage serré sur le bord du boîtier (11) entourant l'ouverture du boîtier (5).

11. Pièce à main selon une des revendications précédentes, dans laquelle le boîtier (2) est moulé par injection à partir d'au moins deux composants en plastique, en particulier un plastique souple et un plastique dur.

12. Pièce à main selon la revendication précédente, dans laquelle le bord de boîtier (11) entourant l'ouverture de boîtier (5) est composé de plastique souple.

13. Pièce à main selon une des revendications précédentes, dans laquelle les moyens d'encliquetage (12, 15) peuvent être encliquetés par un mouvement purement axial.

14. Pièce à main selon une des revendications précédentes, dans laquelle les saillies d'encliquetage (12) formant les moyens d'encliquetage et/ou la paroi intérieure du boîtier (2) sur le bord du boîtier (11) entourant l'ouverture de boîtier (5) présentent des pentes d'introduction (20).

15. Pièce à main selon une des revendications précédentes, dans laquelle les saillies d'encliquetage (12) formant les moyens d'encliquetage et les évidements(15) ou des dégagements possèdent des arêtes d'encliquetage (16, 17), qui s'étendent de manière sensiblement en forme d'hélice autour de l'axe longitudinal (18) du boîtier (2) et/ou du couvercle (6).

16. Pièce à main selon une des revendications précédentes, dans laquelle le couvercle (6) présente un col (8), avec lequel le couvercle (6) peut être inséré dans le boîtier (2) et peut être mis en prise avec une paroi intérieure du boîtier (2).

17. Pièce à main selon la revendication précédente, dans laquelle sur le col (8) et/ou une section de paroi intérieure du boîtier (2) à proximité de celui-ci se trouve au moins une pente ou une courbe d'évacuation s'étendant de préférence sous forme d'héliceautour de l'axe longitudinal du boîtier.

18. Pièce à main selon une des deux revendications précédentes, dans laquelle les moyens d'encliquetage (12) du côté couvercle se trouvent sur le col (8) ou inversement.

19. Pièce à main selon une des revendications précédentes, dans laquelle au moins une courbe ou pente d'évacuation se trouve sur les moyens d'encliquetage entre le couvercle et le boîtier, formée depuis l'arête inférieure opposée au bord du couvercle ou à l'ouverture de boîtier des évidements et saillies d'encliquetage formant les moyens d'encliquetage.

20. Pièce à main selon une des revendications précédentes, dans laquelle les moyens d'encliquetage forment de préférence des sections de filetage en dents de scie.

21. Brosse à dents électrique équipée d'une pièce à main (1) selon une des revendications précédentes.
